Europäisches Patentamt

European Patent Office

Office européen des brevets

(11) Numéro de publication: **0 078 487**

**B1**

(12) **FASCICULE DE BREVET EUROPEEN**

(45) Date de publication du fascicule du brevet: **18.12.85**

(21) Numéro de dépôt: **82109873.8**

(22) Date de dépôt: **26.10.82**

(51) Int. Cl.⁴: **C 03 C 21/00**

(54) Procédé de fabrication d'un diélectrique en verre pour isolateur électrique et diélectrique en résultant.

(30) Priorité: **29.10.81 FR 8120294**

(43) Date de publication de la demande:
**11.05.83 Bulletin 83/19**

(45) Mention de la délivrance du brevet:
**18.12.85 Bulletin 85/51**

(84) Etats contractants désignés:
**AT BE CH DE FR GB IT LI LU NL SE**

(56) Documents cités:
**FR-A-1 463 273**
**FR-A-2 021 483**
**US-A-4 042 405**
**US-A-4 212 919**

(73) Titulaire: **CERAVER Société anonyme dite:**
**12, rue de la Baume**
**F-75008 Paris (FR)**

(72) Inventeur: **Pargamin, Laurent**
**18, rue de la Source de l'Hospital**
**F-03200 Vichy (FR)**
Inventeur: **Parant, Jean-Paul**
**Résidence "La Prairie" Bât C6**
**F-91290 Arpajon (FR)**
Inventeur: **Cornebois, Michel**
**18, rue Latérale**
**F-94000 Creteil (FR)**
Inventeur: **Thoris, Jean**
**28, route de Chartres**
**F-91400 Orsay (FR)**

(74) Mandataire: **Weinmiller, Jürgen et al**
**Zeppelinstrasse 63**
**D-8000 München 80 (DE)**

Courier Press, Leamington Spa, England.

**Description**

La présente invention concerne un procédé de fabrication d'un diélectrique d'isolateur électrique en verre et un diélectrique obtenu par ce procédé. Les diélectriques en verre classiques subissent un traitement de trempe thermique tel qu'ils présentent en surface d'importantes contraintes de compression et intérieurement d'importantes contraintes d'extension. Il en résulte pour le diélectrique une résistance mécanique très améliorée par rapport à celle du verre recuit. Toutefois, on constate que dans certaine circonstances, par exemple en cas de choc, l'existence des contraintes internes permet une fragmentation quasiment totale du diélectrique, ce qui n'affecte pas notablement ni dangereusement la résistance mécanique résiduelle de l'isolateur, mais réduit sa ligne de fuite à la distance dans l'air entre les électrodes.

La présente invention a pour but d'éviter cet inconvénient et de réaliser un diélectrique d'isolateur susceptible de mieux résister aux chocs.

La présente invention a pour objet un procédé de fabrication d'un diélectrique d'isolateur électrique en verre, caractérisé par le fait que l'on part d'un diélectrique en verre recuit et qu'on fait subir une trempe chimique au moins à certaines zones de ce diélectrique; pour cela, on applique sur lesdites zones, ou sur le diélectrique complet, une solution à base de sels alcalins, à température ambiante, on sèche, puis on chauffe pendant quelques heures à une température comprise entre 300°C et 500°C. Le traitement est mis en oeuvre jusqu'à ce que les zones trempées présentent des contraintes externes de compression dont les valeurs maximales soient supérieures à 100 Mega Pascal et des contraintes internes d'extension dont les valeurs maximales restent inférieures à 10 Mega Pascal. Ces valeurs doivent être obtenues notamment aux endroits critiques de l'isolateur susceptibles de travailler mécaniquement.

$H_2O$: 70% à 90%
Amidon: 2% à 10%
$KNO_3$: 4% à 12%
$K_2HPO_4+KCl+K_2SO_4$: 4% à 20%.

De préférence, ladite solution répond à la composition suivante (pourcentages en poids).

$K_2O$: 77%
Amidon: 3%
$KNO_3$: 8%
$K_2HPO_4$: 12%.

Des variantes de réalisaton peuvent être envisagées. Ainsi, une phase de traitement préalable du verre recuit peut être prévue pour modifier la composition superficielle du verre de façon à accélérer les échanges ioniques pendant la trempe chimique.

On peut également mettre en oeuvre pendant la phase de trempe chimique un champ électrique produisant un effet d'électromigration.

L'invention a également pour objet un diélectrique en verre pour isolateur électrique obtenue par le procédé précédent; dans les zones traitées, les contraintes externes de compression apparaissent sur une épaisseur qui est de l'ordre de 20 μm à 100 μm. Les zones traitées sont les zones les plus sollicitées mécaniquement, par exemple au niveau de la tête de l'isolateur. Il peut être plus simple de traiter l'ensemble du diélectrique.

Lorsqu'un tel diélectrique subit un choc dans les zones traitées, on peut observer l'apparition de fissures qui se propagent dans l'épaisseur du diélectrique, mais pas de fragmentation complète de ce dernier; il en résulte une tension de contournement plus élevée que celle d'un moignon.

D'autres caractéristiques et avantages de l'invention apparaîtront au cours de la description suivante de différentes modes de mise en oeuvre du procédé appliqué à une lame de verre sodocalcique dont l'épaisseur est en moyenne de 10 mm.

Il faut ici qu'on connaît par le document US—A—4 042 405 un procédé de fabrication de lentilles ophtalmiques en verre selon lequel on soumet un article en verre recuit à une trempe chimique par échange d'ions dans un bain de sels fondus à une température de 454°C. Ce document préconise en outre l'enduction d'un objet en verre par une pâte contenant une argile et un sel de potassium.

On connaît en outre par le document US—A—4 212 919 un procédé de fabrication de lentilles en verre. Ce procédé comprend une étape de trempe chimique par échange d'ions permettant d'obtenir un verre trempé présentant des contraintes de compression en surface. Cette trempe chimique s'effectue à 425°C. Selon ce document la mise en contact du sel alcalin avec la surface du verre à tremper peut avoir lieu par application d'une pâte, par pulvérisation ou par trempage dans un bain de sel fondu.

L'invention sera décrite ci-après plus en détail à l'aide de quelques exemples de réalisation.

La solution à base de sels alcalins a une composition pouvant être de type suivant: (pourcentages en poids):

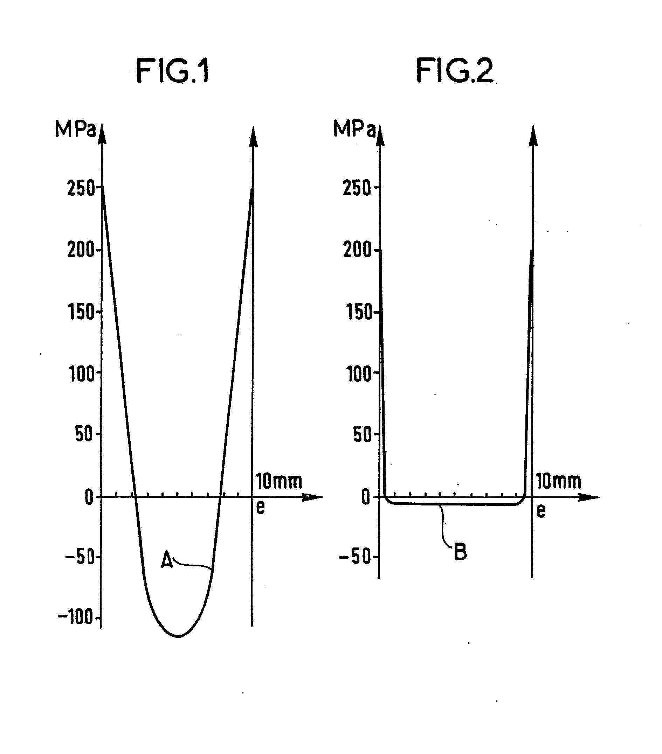

Les figures 1 et 2 montrent la répartition des contraintes (en Mega Pascal) respectivement dans deux échantillons A et B, l'échantillon A ayant subi une trempe thermique conformément à l'art antérieur, l'échantillon B ayant subi une trempe chimique selon l'invention.

# 0 078 487

On voit que l'échantillon A qui a subi une trempe thermique présente des contraintes de compression sur une épaisseur de l'ordre de 2 mm; la valeur maximale de ces contraintes est de l'ordre de 250 MPa. Il présente en outre d'importantes contraintes internes d'extension, la valeur maximale de ces contraintes étant de l'ordre de 100 MPa.

L'échantillon B a subi une trempe chimique dans les conditions suivantes; on a plongé l'échantillon recuit dans une solution à la température ambiante et présentant la composition suivante:

$H_2O$: 77%
Amidon: 3%
$KNO_3$: 8%
$K_2HPO_4$: 12%.

Cette solution mouille très bien le verre et le diélectrique est complètement recouvert d'un film liquide dont on peut contrôler la viscosité. On effectue une opération de séchage puis un traitement thermique pendant 8 heures à la température de 500°C.

On voit sur la courbe B la répartition des contraintes d'extension et de compression dans le diélectrique B.

La valeur maximale des contraintes de compression externes est de l'ordre de 200 MPa, tandis que la valeur maximale des contraintes de compression internes est très inférieure à 10 MPa. L'épaisseur de la zone en compression est de l'ordre de 100 μm. Les contraintes internes d'extension sont suffisamment faibles pour éviter une fragmentation de l'échantillon en cas de choc violent.

On obtient des résultats aussi intéressants en modifiant comme indiqué ci-dessous les conditions opératoires de la trempe chimique. Ainsi la solution utilisée pour la trempe chimique peut être choisie parmi les compositions suivantes (pourcentages donnés en poids):

$H_2O$: 70% à 90%
Amidon: 2% à 10%
$KNO_3$: 4% à 12%
$K_2HPO_4 + KCl + K_2SO_4$: 4% à 20%.

L'amidon peut être remplacé par un liant équivalent, par exemple de type colle émulsifiable.

Le chauffage dure quelques heures et la température est comprise entre 300°C et 500°C.

On obtient ainsi un diélectrique B' selon l'invention dont les caractéristiques mécaniques sont consignées dans le tableau I ci-dessous. Le diélectrique A' est un diélectrique de l'art antérieur trempé thermiquement dans différentes conditions de température ou d'hygrométrie de l'air de soufflage.

TABLEAU I

|  | Contraintes internes maximales d'extension (Mega Pascal) | Contraintes externes maximales de compression en (Mega Pascal) | Epaisseur de la zone en compression |
|---|---|---|---|
| Diélectrique trempé thermiquement A' | supérieure à 100 MPa | 200 à 400 MPa | supérieure à 1 mm |
| Diélectrique trempé Chimiquement B' | inférieures à 10 MPa | 100 à 300 MPa | 20 μm à 100 μm |

Le procédé de trempe chimique qui vient d'être décrit est extrêmement avantageux notamment pour les raisons suivantes:

— utilisation de faibles quantités de sels alcalins et de liant organique puisque le produit de départ est une solution,
— très bonne adhérence du film après séchage, ce qui permet une manipulation aisée des pièces traitées.

On peut envisager d'améliorer encore le procédé selon l'invention en prévoyant une phase de traitement préalable à la trempe chimique précédente pour modifier la composition superficielle du verre du diélectrique et amplifier l'effet de la trempe chimique ultérieure.

Premier exemple: Le verre contient initialement des ions potassium: On trempe le diélectrique dans une solution à base de nitrate de sodium, on sèche et on chauffe vers 450°C. Pour relâcher les contraintes dûes aux échanges ioniques qui sont intervenus, on chauffe ensuite la pièce à une température supérieure à la température de transformation du verre. On effectue ensuite la trempe chimique telle qu'elle a été définie plus haut.

Deuxième exemple: Le verre contient initialement des ions sodium: On plonge le diélectrique dans une solution à base de nitrate de lithium et de nitrate de sodium; on sèche et on chauffe vers 350°C environ.

3

**0 078 487**

Pour relâcher les contraintes dûes aux échanges ioniques intervenus, on chauffe ensuite la pièce à une température supérieure à la température de transformation du verre.

La trempe chimique ultérieure se fait par trempage dans une solution d'un sel de sodium, qui permet un échange ionique entre le lithium et le sodium. Elle peut se faire également par trempage dans une solution d'un sel de sodium et d'un sel de potassium qui permet des échanges ioniques entre le lithium et le sodium d'une part, et le sodium et le potassium d'autre part.

Selon une autre variante de mise en oeuvre, on soumet les zones du diélectrique subissant la trempe chimique, pendant le traitement, à un champ électrique pour réaliser une électromigration qui renforce efficacement les échanges ioniques.

Bien entendu, l'invention n'est pas limitée aux exemples décrits.

**Revendications**

1. Procédé de fabrication d'un diélectrique d'isolateur électrique, en verre, caractérisé par le fait que l'on part d'un diélectrique en verre recuit et qu'on lui fait subir au moins partiellement une trempe chimique, jusqu'à ce que les zones trempées présentent des contraintes externes de compression dont les valeurs maximales soient supérieures à 100 Mega Pascal et des contraintes internes d'extension dont les valeurs maximales restent inférieures à 10 Mega Pascal, procédé selon lequel on applique sur lesdites zones, ou sur le diélectrique complet, une solution à base de sels alcalins, à température ambiante, on sèche, puis on chauffe pendant quelques heures à une température comprise entre 300°C et 500°C.

2. Procédé de fabrication selon la revendication 1, caractérisé par le fait que ladite solution à base de sels alcalins a une composition de type suivant (pourcentages en poids):

$H_2O$: 70% à 90%
Amidon: 2% à 10%
$KNO_3$: 4% à 12%
$K_2HPO_4+KCl+K_2SO_4$: 4% à 20%.

3. Procédé de fabrication selon la revendication 2, caractérisé par le fait que ladite solution répond à la composition suivante (pourcentages en poids):

$K_2O$: 77%
Amidon: 3%
$KNO_3$: 8%
$K_2HPO_4$: 12%.

4. Procédé de fabrication selon la revendication 1, caractérisé par le fait que préalablement au traitement de trempe chimique desdites zones, on modifie la composition superficielle du verre par une autre trempe chimique suivie d'un recuit.

5. Procédé de fabrication selon l'une des revendications précédentes, caractérisé par le fait que, pendant la trempe chimique, on soumet lesdites zones à un champ électrique.

6. Diélectrique d'isolateur électrique en verre sodocalcique, obtenu par le procédé selon l'une des revendications 1 à 5, caractérisé par le fait que dans lesdites zones traitées les contraintes externes de compression apparaissent sur une épaisseur qui est de l'ordre de 20 µm à 100 µm.

**Patentansprüche**

1. Verfahren zur Herstellung eines Glasdielektrikums für einen elektrischen Isolator, dadurch gekennzeichnet, daß man von einem wärmebehandelten Glasdielektrikum ausgeht, und daß man es mindestens teilweise einer chemischen Härtung unterwirft, bis die gehärteten Bereiche äußere Kompressionsspannungen aufweisen, deren maximale Werte höher als 100 MPa liegen, und innere Ausdehnungsspannungen, deren maximale Werte unter 10 MPa bleiben, und daß man auf die genannten Bereich oder auf das ganze Dielektrikum eine Lösung auf der Basis von Alkalisalzen bei Umgebungstemperatur aufbringt, dann das Ganze trocknet und während einiger Stunden auf eine Temperatur zwischen 300 und 500°C erhitzt.

2. Herstellungsverfahren nach Anspruch 1, dadurch gekennzeichnet, daß die Lösung auf der Basis von Alkalisalzen eine Zusammensetzung des folgenden Typs hat (in Gew.%):

$H_2O$: 70% bis 90%
Stärke: 2 bis 10%
$KNO_3$: 4% bis 12%
$K_2HPO_4+KCl+K_2SO_4$: 4% bis 20%.

3. Herstellungsverfahren nach Anspruch 2, dadurch gekennzeichnet, daß die Lösung der folgenden Zusammensetzung entspricht (in Gew.%):

# 0 078 487

$H_2O$: 77%
Stärke: 3%
$KNO_3$: 8%
$K_2HPO_4$: 12%.

4. Herstellungsverfahren nach Anspruch 1, dadurch gekennzeichnet, daß man vor der chemischen Härtebehandlung der genannten Bereiche die Zusammensetzung des Glases an dessen Oberfläche durch eine weitere chemische Härtung, gefolgt von einer Wärmebehandlung verändert.

5. Herstellungsverfahren nach einem der vorhergehenden Ansprüche, dadurch gekennzeichnet, daß man während der chemischen Härtung die Bereiche einem elektrischen Feld unterwirft.

6. Glasdielektrikum aus einem Natrium-Kalzium-Glas für einen elektrischen Isolator, der gemäß einem der Ansprüche 1 bis 5 hergestellt wurde, dadurch gekennzeichnet, daß in den behandelten Bereichen die äußeren Kompressionsspannungen in einer Dicke von 20 μm bis 100 μm auftreten.

## Claims

1. A method of manufacturing a dielectric material for use as an electrical glass insulator, characterized in that the method starts with an annealed glass dielectric material and that this material is at least partially submitted to a chemical tempering until the tempered zones present external compression rates with maximum values above 100 MPa, and internal tension rates with maximum values below 10 MPa, and that a solution containing alcaline salts is applied at ambient temperature to said zones or to the entire dielectric material, that a drying step is performed and that finally said material is heated for several hours to a temperature of between 300 and 500°C.

2. A manufacturing method according to claim 1, characterized in that said solution containing alcaline salts has the following composition (in percentage by weight):

$H_2O$: 70 to 90%
Starch: 2 to 10%
$KNO_3$: 4 to 12%
$K_2HPO_4+KCl+K_2SO_4$: 4% to 20%.

3. A manufacturing method according to claim 2, characterized in that said solution has the following composition (in percentage by weight):

$H_2O$: 77%
Starch: 3%
$KNO_3$: 8%
$K_2HPO_4$: 12%.

4. A manufacturing method according to claim 1, characterized in that prior to the chemical tempering treatment of said zones, the composition of the glass surface is modified by a further chemical tempering step followed by annealing.

5. A manufacturing method according to one of the preceding claims, characterized in that said zones are submitted to an electrical field during the chemical tempering step.

6. A dielectric material of an electrical sodium-calcium glass insulator obtained by the method according to one of the claims 1 to 5, characterized in that, in that treated zone, the external compression stresses appear in a thickness of about 20 to 100 μm.

5

# FIG.1

# FIG.2